# EUROPÄISCHE PATENTANMELDUNG

(11) **EP 2 743 009 A2**
(43) Veröffentlichungstag der Anmeldung: **18.06.2014**
(21) Anmeldenummer: 13001172.9
(22) Anmeldetag: 12.03.2013
(51) Int. Cl.: B07C 7/00

(54) **Anlage und Verfahren für die Pressedistribution**

(30) Priorität: 11.04.2012 DE 102012007094; 18.12.2012 DE 102012024698
(71) Anmelder: TWI GmbH, 76189 Karlsruhe (DE)
(72) Erfinder: Eberhard, Hans-Joachim Dipl.-Ing., D - 76 287 Rheinstetten (DE)
(74) Vertreter: Happe, Otto

(57) **Zusammenfassung**

Die Erfindung betrifft eine Anlage für die Durchführung von Maßnahmen im Zusammenhang mit dem Vertrieb von Presseerzeugnissen, so genannte Pressedistribution. Bei dieser Anlage sind Vorrichtungen für die Kommissionierung und Vorrichtungen für die Remission von Presseerzeugnissen zusammengefasst, wobei mindestens eine der Vorrichtungen sowohl an der Kommissionierung als auch an der Remission beteiligt ist, so dass mit der so gebildeten Anlage sowohl eine fehlerfreie Kommissionierung als auch eine korrekte Remission durchgeführt werden können.

## Beschreibung

Die Erfindung betrifft eine Anlage für die Durchführung von Maßnahmen im Zusammenhang mit dem Vertrieb von Presseerzeugnissen - so genannte Pressedistribution - und ein Verfahren für die Durchführung von Maßnahmen mittels der Anlage.

Pressefreiheit ist ein hohes Gut. Die Verteilung von Presseerzeugnissen und besonders das Remissionsrecht haben daher für jede Demokratie eine besondere Bedeutung. Im Zusammenhang mit der Verteilung von Presseerzeugnissen sind mehrere Maßnahmen durchzuführen. Zunächst sind bestimmte Presseerzeugnisse bestimmten Kunden zuzuordnen, wobei sicherzustellen ist, dass die Belieferung der Kunden mit den Presseerzeugnissen pünktlich und zuverlässig durchgeführt wird. Diese Maßnahmen werden als Kommissionierung bezeichnet. Die Kommissionierung kann halbautomatisch oder manuell mittels entsprechender Vorrichtungen durchgeführt werden, wobei für die notwendigen Handhabungen Kommissionierer - nachstehend als Picker bezeichnet - eingesetzt werden.

Damit den Kunden für unverkaufte zurückgegebene Presseerzeugnisse der volle Einkaufspreis erstattet werden kann, ist als weitere Maßnahme eine Remission durchzuführen. Dabei wird die Remissionsware mittels Erfassungssystemen erkannt, gezählt und verarbeitet. Aufgrund der dabei erhaltenen Ergebnisse erfolgt eine Abrechnung mit den Kunden und vor allem mit den Verlagen, die alles bezahlen müssen. Auch für die Remission werden entsprechende Vorrichtungen benötigt.

Die für die vorgenannten Maßnahmen - Kommissionierung und Remission - im Zusammenhang mit dem Vertrieb von Presseerzeugnissen erforderlichen Vorrichtungen sind sehr aufwendig und vor Allem sehr teuer. Sie können daher in manchen Ländern nicht eingesetzt werden.

Der Erfindung liegt die Aufgabe zu Grunde, die für die Kommissionierung und die Remission benötigten Vorrichtungen so auszubilden, dass sie einfach und kostengünstig herzustellen und darüber hinaus einfach und ohne besondere Kenntnisse zu bedienen sind. Die Lösung der gestellten Aufgabe besteht bei einer Anlage der eingangs genannten Art in erster Linie darin, dass Vorrichtungen für die Kommissionierung und Vorrichtungen für die Remission von Presseerzeugnissen zusammengefasst sind, wobei mindestens eine der Vorrichtungen sowohl an der Kommissionierung als auch an der Remission beteiligt ist, so dass mit der so gebildeten Anlage sowohl eine fehlerfreie Kommissionierung als auch eine korrekte Remission durchgeführt werden können.

Die erfindungsgemäße Anlage ist verhältnismäßig klein und daher leicht zu transportieren. Sie ist ferner sehr kostengünstig herzustellen. Die Herstellungskosten liegen um mehr als 50 % unter den Kosten für bekannte Anlagen. Da das Gewicht einer derartigen Anlage nicht mehr als 200 kg beträgt, ist sie luftfrachtfähig. Sie eignet sich daher insbesondere zum Einsatz in so genannten Schwellenländern, wo die als Picker einsetzbaren Personen über keine oder nur über eine geringe Qualifikation verfügen. Dadurch ergeben sich bisher häufig erhebliche Schwierigkeiten, beispielsweise bei der Remissionsabrechnung. Die Remissionsabrechnung ist aber das wichtigste Requisit der Pressefreiheit. Ähnliche Schwierigkeiten ergeben sich bei der Presseauslieferung. Hierbei muss meist vom Lieferschein abgelesen werden, wobei es durch die mangelhaften Lesekenntnisse immer wieder zu Fehlern kommt.

Die erfindungsgemäße Anlage ist so ausgestaltet, dass sie mehrere identische Module mit jeweils zwei Motoren aufweist, die beide sowohl vorwärts als auch rückwärts laufen können, wobei der erste Motor als Antriebsmotor dient und mit einem Bahnsensor für den Antrieb versehen ist, während der zweite Motor als mit einem Bahnsensor für die Schleuse versehener Schleusenmotor ausgebildet ist, dass der Antriebsmotor schräg nach unten hängend angeordnet ist und auf der Antriebswelle eines Getriebes eine große Riemenscheibe für einen Rundriemen trägt, der eine Steckachse auf der Ausgangsseite des betreffenden Moduls antreibt,
dass auf der Steckachse zwei Riemenscheiben montiert sind, die jeweils rechts und links des Moduls je einen Rundriemen treiben, und zwar für den Längstransport der Stapel oder der Remissionsware,
und dass der Schleusenmotor horizontal eingebaut ist und auf der Antriebswelle eine Gummiwalze und ein Reibrad trägt, das bei drehendem Motor ein exzentrisch gelagertes weiteres Reibrad antreibt.

Durch diese Ausgestaltung der erfindungsgemäßen Anlage braucht man für die Kommissionierung also nur den Antriebsmotor und die Bahnsensoren, während für die Remission beide Motoren und die Bahnsensoren gebraucht werden. Anstelle der Reibräder können auch Zahnräder eingesetzt werden.

Nach einem weiteren Merkmal der Erfindung sind zwölf Module hintereinander auf einem Kabelkanal aus Kunststoff aufgesteckt, der aus etwa 1 m langen Teilstücken zusammengesetzt ist, wobei der Kabelkanal auf etwa sechs Pendelstützen montiert ist. Die einzelnen Module haben zweckmäßigerweise eine Länge von 49 cm. Diese Länge ist einerseits bestimmt durch die Abmessungen der durchschnittlichen Pressepakete von etwa 30 mal 40 cm Grundfläche, die bequem auf ein einziges Modul passen müssen. Andererseits sollen die Spalten zwischen den eng zusammengeschobenen Modulen nicht auf die Spalten des Kabelkanals treffen. Aus Transportgründen ist die maximale Stücklänge auf 1 m limitiert.

Die erfindungsgemäße Anlage weist zweckmäßigerweise für die Remission fünfundzwanzig automatische Schleusen auf, die rechts und links auf einer durch die Module gebildeten Bahn von 6 m Länge angeordnet sind. Die gewählte Bahnlänge von 6 m ist ein Kompromiss aus den räumlichen Gegebenheiten. Sie kann aber bei Bedarf auch auf 20 m Länge und damit 80 Schleusen für die Remission und 40 Ablegeplätze für die Kommission vergrößert werden.

Damit für die Kommission jeder Picker mit seinem persönlichen Tempo arbeiten kann und schließlich auch genau dafür bezahlt wird, darf er nicht durch langsame Kollegen behindert werden. Er braucht also stets einen freien Ablegeplatz für sein fertiges Paket auf der Bahn. Bei durchschnittlich sechs Pickern und bei einer Bahnlänge von 6 m entstehenden zwölf Ablageplätzen dürfte dies auch für den langsamsten Picker immer gegeben sein.

Bei einer bestimmten Ausbildungsform der Anlage bestehen die an den Motoren vorgesehenen Bahnsensoren aus kleinen Infrarot-Reflexlichtschranken, die nach oben zu der durch die Module gebildeten Bahn ausgerichtet sind und auf die über die Bahn fahrende Objekte in der Weise reagieren, dass der betreffende Motor ein- oder ausgeschaltet wird. So schaltet der im Antriebsmotor vorgesehene Bahnsensor diesen Motor ein, der erst dann ausgeschaltet wird, wenn der Antriebsmotor des nächsten Moduls startet. Dadurch ist ein konstanter Transport bei geringem Stromverbrauch gewährleistet. Der Bahnsensor im Schleusenmotor schaltet diesen sowohl ein als auch aus. Bei kurzen Objekten macht deshalb die betreffende Schleuse nur einen einzigen Pendelschlag auf- und wieder abwärts, während die Gummiwalze sich zweimal um ihre Achse dreht, also etwa 30 cm Weg zur Seite erzeugt. Bei längeren Objekten, beispielsweise Zeitungen, hebt sich die drehende Walze mehrmals, um auch diese großen Objekte sicher auszuschleusen.

Da die Anlage im Betrieb nur wenig Energie verbraucht, kann die Anlage mit einfachsten Antriebsmitteln betrieben werden. Zweckmäßiger Weise Ist für den Antrieb der Anlage eine Autobatterie vorgesehen. Derartige Batterien sind sehr kostengünstig und können mit einer Ladung die erfindungsgemäße Anlage etwa acht Stunden lang betreiben.

Am Ende der Bahn kann eine Waage angeordnet sein. Hierdurch können minimale Zählfehler entdeckt und korrigiert werden. Die Anlage kennt das Sollgewicht jedes Paketes, da alle Objekte vor dem Versand gewogen werden. Ein fehlerhaftes Paket bleibt auf der Waage stehen und es wird derjenige Picker alarmiert, der das Paket gepackt hat. Durch die entsprechend angeordnete Waage wird mit der neuen Anlage eine um ein Vielfaches höhere Genauigkeit erreicht als mit bekannten Anlagen. Die Waage kann ferner dazu dienen, zu verhindern, dass das Paket - mit Rücksicht auf internationale Arbeitsschutzvorschriften - ein Gewicht von 8 kg überschreitet.

Bei einem Verfahren für die Durchführung von Maßnahmen mittels der Anlage besteht die Erfindung darin, dass anstelle der bisher üblichen rein sequentiellen Arbeitsweise bei der Kommissionierung der Presseerzeugnisse nunmehr die Kommissionierung durch parallele Aufteilung in viele gleichzeitige Arbeitsschritte durchgeführt wird. Dadurch wird eine lineare Verkürzung der Zeitdauer mit der Anzahl der eingesetzten Picker erreicht. Das ist mit keinem anderen bekannten Verfahren möglich, weder mit "Pick by light" noch mit "Pick by paper". Bei dem erfindungsgemäßen Verfahren hat jeder Picker Zugriff auf sämtliche Artikel und er stellt jedes Paket komplett fertig, ohne auf seine Kollegen warten zu müssen. Am Schluss legt er den Lieferschein auf sein Paket und schnürt es mit landesüblichen Schnürmitteln fest. Das Verfahren ermöglicht es somit jedem Picker, mit seinem persönlichen Tempo zu arbeiten und auch genau dafür bezahlt zu werden. Dieser Anreiz steht in vorzüglichem Gegensatz zur starren Zonenstruktur, wo allein der langsamste Picker das Gesamttempo bestimmt und kein Leistungslohn möglich ist.

Zweckmäßigerweise werden die Anweisungen an die Picker für die Durchführung der zu treffenden Maßnahmen mittels Sprachsteuerung erteilt, wobei jeder einzelne Picker seine jeweiligen Anweisungen per Funk über einen Kopfhörer mit Mikrofon - so genanntes Headset - erhält. Durch den Ersatz der bisher üblichen und seit Jahrzehnten bewährten Displaytechnik durch die Sprachsteuerung können auch solche Arbeitskräfte als Picker eingesetzt werden, die nicht lesen können. Hören und sprechen können fast alle Menschen sämtlicher Rassen, auch ohne großes geistiges Niveau. Darüber hinaus ist erfahrungsgemäß die Fehlerquote beim Hören von Zahlen geringer als beim Ablesen, beispielsweise von einem Display. Deshalb ist die Sprachsteuerung das Mittel der Zukunft.

Entscheidend für die hohe Qualität ist die Tatsache, dass jeder Titel einzeln bestätigt werden muss, anstelle der sonst üblichen Paket- oder Zonenbestätigung.

Da sämtliche Lagerorte mit jeweils drei Zahlen von 0 bis 9 beschriftet sind, wird damit bei geringem Investitionsaufwand eine fehlerfreie Kommissionierung von bis zu tausend Titeln ermöglicht.

Es hat sich als zweckmäßig erwiesen, dass die Lieferscheine im Rechenzentrum erstellt und vorzugsweise mittels Ketten- oder Hammerdruckern auf Zick-Zack-Papier gedruckt werden. Dabei kann nichts durcheinander kommen und kein Lieferschein kann verloren gehen. Der Leitrechner der Anlage erstellt vor jedem Versand unter Kenntnis sowohl sämtlicher Versanddetails als auch der Leistungsfähigkeit der Picker einen ausführlichen Kommissionierplan, gibt das Ergebnis an das Rechenzentrum, das für jeden Picker einen Lieferscheinstapel auf Zick-Zack-Papier ausdruckt. Der Kommissionierplan kann den gesamten Versand oder nur den Teil bis zur ersten Pause umfassen. Jeder Lieferschein trägt die zweistellige Pickernummer und die Fahrfolgenummer jedes Kunden.

Nachdem die vorgenannte Maßnahme durchgeführt ist und die Anlage startet, läuft ein Vorgang gemäß dem nachstehend genannten Beispiel ab: Jeder Picker spricht die Fahrfolgenummer seines ersten Lieferscheins in das Mikrofon seines Headsets. Dann sagt sein Headset "go to one four seven". Der Picker geht dann zum Lagerort 147 und wiederholt "one four seven". Dann sagt das Headset "take five". Der Picker nimmt dann fünf Exemplare und wiederholt "five". Nun nennt das Headset den nächsten Lagerort "go to one four eight", also immer in aufsteigender Reihenfolge, so wie auch die Paletten gestellt werden. Der Picker bestätigt den Lagerort durch Wiederholung der Nummer "one four eight", hört dann die Stückzahl und bestätigt auch diese. So geht es weiter, bis das Headset sagt "strap". Der Picker legt nun den Lieferschein oben auf das Paket und schnürt das Paket dann mit handelsüblichen Mitteln. Danach liest der Picker die Fahrfolgenummer des geschnürten Pakets und hört "put on eight". Gleichzeitig öffnet sich in der RECO-Bahn der Platz 8, auf den der Picker das fertige Paket legt und dabei "eight" sagt. Jetzt fährt das Paket weg oder bleibt je nach Situation stehen, weil davor noch weitere Pakete von anderen Pickern erwartet werden, die kleinere Fahrfolgenummern haben oder zu einer früheren Tour gehören. Der Picker braucht nicht zu warten und liest die Fahrfolgenummer seines nächsten Lieferscheins vor, und zwar immer jede Ziffer einzeln. Jetzt hat der Picker den Auftrag für sein nächsten Paket, das er in gleicher Weise fertigstellt.

Die für die Sprachsteuerung notwendigen Elemente können ein Sprachlabor bilden. Dadurch ergibt sich bei Verwendung entsprechender Downloads für die Picker die Möglichkeit, in den Pausen englisch sprechen zu lernen. Daran sind die UNESCO und auch die Entwicklungshilfe sehr interessiert.

Eine sehr wesentliche Weiterentwicklung der Erfindung besteht darin, dass jeder an der Anlage arbeitende Picker seine Anweisungen nicht nur akustisch, also per Sprache (pick by Voice), sondern gleichzeitig die betreffende Anweisung auch optisch erhält. Dadurch, dass bei der neuen Anlage gleichzeitig zwei menschliche Sinne angesprochen werden, nämlich Hören und Sehen, wird eine sehr hohe Pickqualität erzielt.

In Ausgestaltung dieser Weiterentwicklung ist jeder Picker mit einem - intern als "RECO PILOT" bezeichnen - Gerät versehen, an dem neben einem Lautsprecher ein mit einem Display versehener Mikrorechner angebracht ist, wobei in dem Mikrorechner bis zu 20.000 Pick-Zeilen gespeichert sind, wobei in weiterer Ausgestaltung der Erfindung das Display als Farb-Display ausgebildet ist und dass mit jeder neuen Ansage (Anweisung) des RECO PILOT die Farbe des Displays wechselt, und zwar auf diejenige Farbe, mit der auch die Lagerortskennung markiert ist. Durch dieses Merkmal der Erfindung wird ein weiterer menschlicher Sinn angesprochen, nämlich der Farbsinn. Dadurch wird die Pickqualität weiter erhöht.

Zweckmäßigerweise ist der RECO PILOT an einem Armband befestigt, an dem der mit dem Display versehene Mikrorechner und der Lautsprecher angebracht sind. Ein derartiges Armband trägt jeder Picker wie eine Armbanduhr am Handgelenk. Durch die erfindungsgemäße Ausbildung der Anlage und des damit auszuführenden Verfahrens wird ermöglicht, dass eine Vielzahl auch als Fahrer tätiger Picker gemeinsam zusammen arbeiten können, um alle Frühtouren innerhalb einer Stunde zu packen. Mittels des RECO PILOT wird jeder Pickauftrag zeitlich so gestartet und gesteuert, dass jeder Picker mit vollem Tempo arbeiten kann. Die intelligente RECO-Bahn sorgt hierbei für die Einhaltung der korrekten Fahrfolge.

Dadurch, dass die Picker ihre Anweisungen als simultane optische und akustische Information erhalten, wobei gleichzeitig auch der Farbsinn angesprochen wird, wird ein sehr schnelles Arbeiten ermöglicht und Fehler werden praktisch ausgeschlossen. Im beleuchteten Display wird der Lagerort sichtbar, zum Beispiel "253" und die Exemplarzahl, beispielsweise "8". Gleichzeitig hört der Picker "twofive-three, take eight". Durch diese Doppelinformation ist das Verfahren außerordentlich sicher, weil kein Titel vergessen werden und jeder der vielen Picker völlig unabhängig von den anderen Pickern arbeiten kann.

Ist ein Paket fertig, informiert der RECO PILOT den Picker über die Nummer des Lieferscheins, der auf dieses Paket gelegt und von dem Picker mit diesem verschnürt wird. Die korrekte Fahrfolge wird dadurch erzielt, dass oberhalb der durch die Module gebildeten RECO-Bahn - in Augenhöhe der Picker - eine Display-Schiene angeordnet ist, auf der die Picker die jeweilige Anweisung sehen können. Das fertige Paket legt der Picker genau an der Stelle auf die RECO-Bahn, an der oberhalb seine Pickernummer blinkt. Dadurch ist die Einhaltung der Fahrfolge sichergestellt und alle Pakete fahren in der richtigen Reihenfolge über die Waage.

Durch die erfindungsgemäß ausgestaltete Anlage ergeben sich die weiteren Vorteile, dass jeder Picker nach Leistung bezahlt wird, was in Schwellenländern den stärksten Anreiz bewirkt, und dass mit jedem weiteren Picker die Arbeitszeit linear sinkt.

Der Mikrorechner kann durch einen modifizierten handelsüblichen MP3/MP4-Player gebildet werden. Dadurch sind die Mikrorechner sehr preiswert zu beschaffen und verbilligen somit den erfindungsgemäßen RECO PILOT.

Mit der erfindungsgemäß durch den RECO PILOT erweiterten Anlage können sechs verschiedene Betriebsarten durchgeführt werden, die nachstehend mit ihren internen Bezeichnungen benannt sind:
- SORT-Mode: Sortieren, Schleusen und Sammeln von Warensortimenten in 25 Boxen,
- REMI-Mode: Erfassen aller Remittenden und vollautomatisches Sortieren auf siebenundzwanzig Behälter,
- RECO-Mode: Ultraschnelles Kommissionieren der üblichen sechs bis zehn extrem frühen Touren,
- TOUR-Mode: Tourenweises Kommissionieren mit bis zu vierzig Pickern bei sehr geringem Platzbedarf,
- LINE-Mode: Arbeitet wie eine Picklinie mit Zonen, aber jeder der zwei bis zwölf Picker kann beliebig vorarbeiten,
- TEST-Mode: Testbetrieb bei Dauerlauf der Anlage und Justierung aller Antriebe und Anlagenbestandteile,

Anhand der Zeichnung sind die erfindungsgemäße Anlage und das erfindungsgemäße Verfahren näher erläutert. Es zeigen:
- Fig. 1: eine Anlage für die Pressedistribution in Seitenansicht, in schematischer Darstellung;
- Fig. 2: die in Fig. 1 dargestellte Anlage in einer Draufsicht, ebenfalls in schematischer Darstellung;
- Fig. 3: eines der in der Anlage mehrfach vorhandenen Module in Seitenansicht;
- Fig. 4: das in Fig. 3 dargestellte Modul in Vorderansicht.;
- Fig. 5: eine weitere Anlage für die Pressedistribution in Seitenansicht, in schematischer Darstellung;
- Fig. 6: einen mit einem Armband versehenen RECO PILOT für die simultane optische und akustische Wiedergabe der für den Picker bestimmten Anweisungen, in perspektivischer Darstellung.

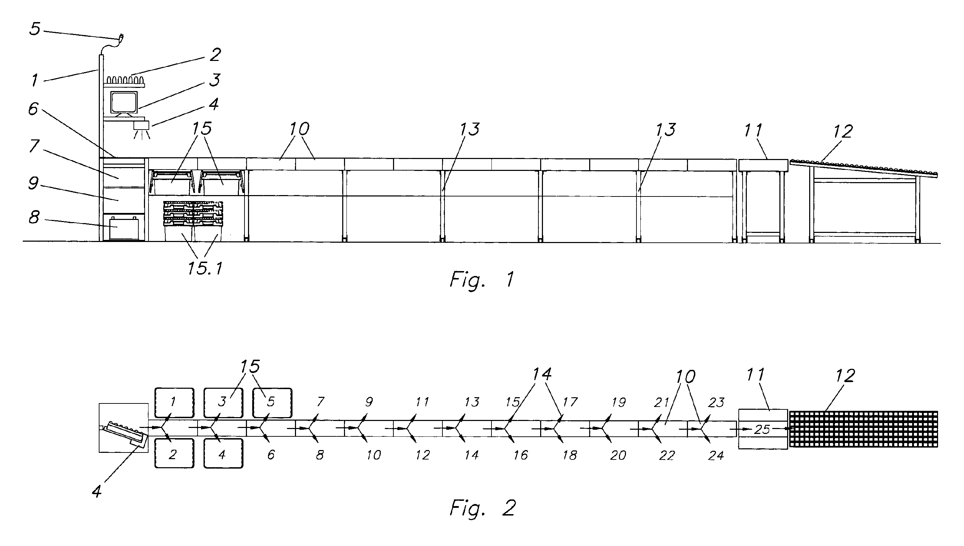

Bei der in den Fig. 1 und 2 dargestellten Anlage sind mehrere Gegenstände an einem Mast **1** angebracht, nämlich eine Aufladestation **2** für Headsets, ein Notebook **3,** und ein Scanner **4.** Der Mast **1** erhält eine Stromzufuhr mittels eines Netzkabels **5.** Im vorderen Teil der Anlage (in der Zeichnung links) ist eine Glasscheibe **6** vorgesehen, unter der sich die Steuerelektronik **7** befindet. Im unteren Bereich der sich an den Mast **1** anschließenden Anlage befindet sich eine Autobatterie **8,** mit der die Anlage angetrieben wird. Der Zwischenraum **9** zwischen der Steuerelektronik **7** und der Autobatterie **8** kann für die Lagerung von Ersatzteilen genutzt werden. Unmittelbar an die Glasscheibe **6** schließen sich mehrere Module **10** an. Danach folgen eine Waage **11** und eine Rollenbahn **12.** Die Module **10** ruhen auf sechs Pendelstützen **13.**

Für die Remission sind fünfundzwanzig automatische Schleusen **14** vorgesehen (vgl. Fig. 2), von denen vierundzwanzig rechts und links der durch die Module **10** gebildeten Bahn angeordnet sind, während die fünfundzwanzigste Schleuse **14** über die Waage **11** zu der Rollenbahn **12** führt. Mittels der Schleusen **14** werden die Remittenden Boxen **15** zugeführt. Die als Vorrat gehaltenen Boxen **15.1** können unterhalb der Module **10** gelagert werden (vgl. Fig. 1).

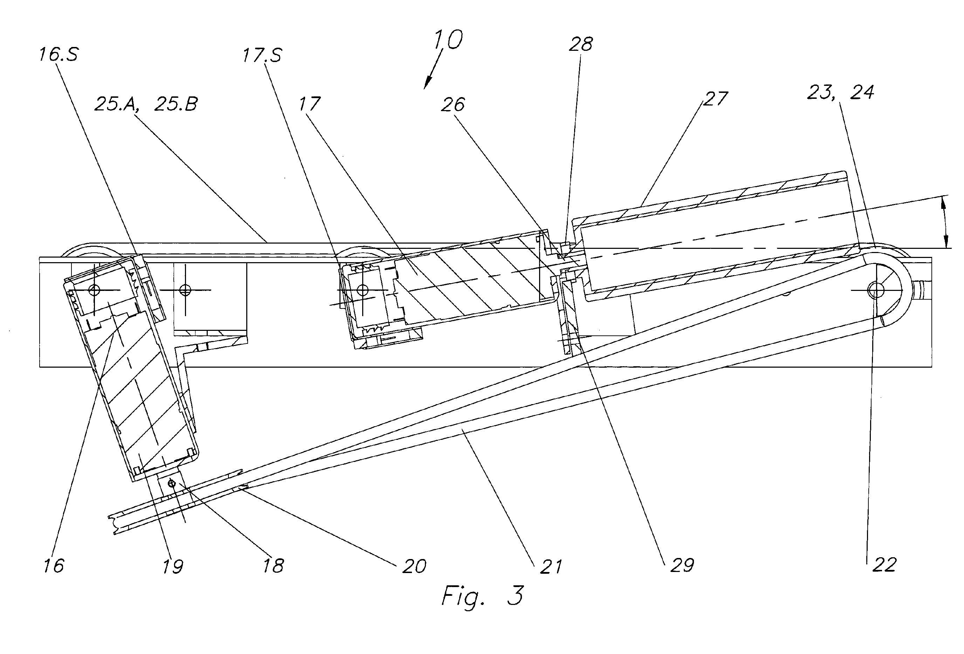

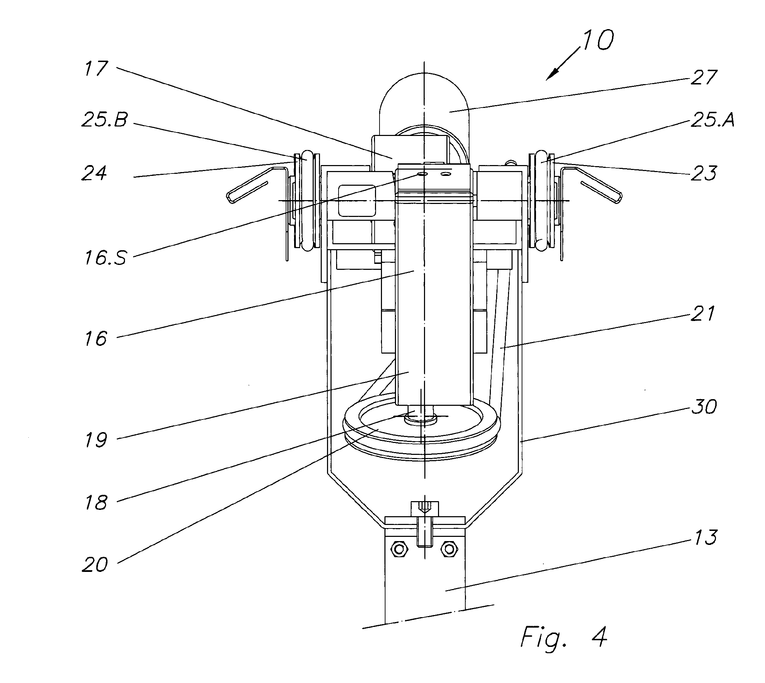

Das in den Fig. 3 und 4 dargestellte, in der Anlage mehrfach vorhandene Modul **10** weist jeweils zwei Motoren **16, 17** auf, die beide sowohl vorwärts als auch rückwärts laufen können. Der erste Motor dient als Antriebsmotor **16** und ist mit einem Bahnsensor **16.S** für den Antrieb versehen. Der zweite Motor ist als mit einem Bahnsensor **17.S** für die Schleuse versehener Schleusenmotor **17** ausgebildet. Der Antriebsmotor **16** ist schräg nach unten hängend angeordnet und trägt auf der Antriebswelle **18** eines Getriebes **19** eine große Riemenscheibe **20** für einen Rundriemen **21,** der eine Steckachse **22** auf der Ausgangsseite des betreffenden Moduls **10** antreibt. Auf der Steckachse **22** sind zwei Riemenscheiben **23, 24** montiert, die jeweils rechts und links des Moduls **10** je einen Rundriemen **25.A, 25.B** treiben, und zwar für den Längstransport der Stapel oder der Remissionsware. Der Schleusenmotor **17** ist horizontal eingebaut und trägt auf der Antriebswelle **26** eine Gummiwalze **27** und ein Reibrad **28,** das bei drehendem Motor **17** ein exzentrisch gelagertes weiteres Reibrad **29** antreibt.

Wie aus Fig. 4 zu ersehen ist, sind die Module **10** hintereinander auf einem Kabelkanal **30** aus Kunststoff aufgesteckt, der aus Teilstücken zusammengesetzt ist. Der Kabelkanal **30** ruht auf den Pendelstützen **13** (vgl. Fig. 1).

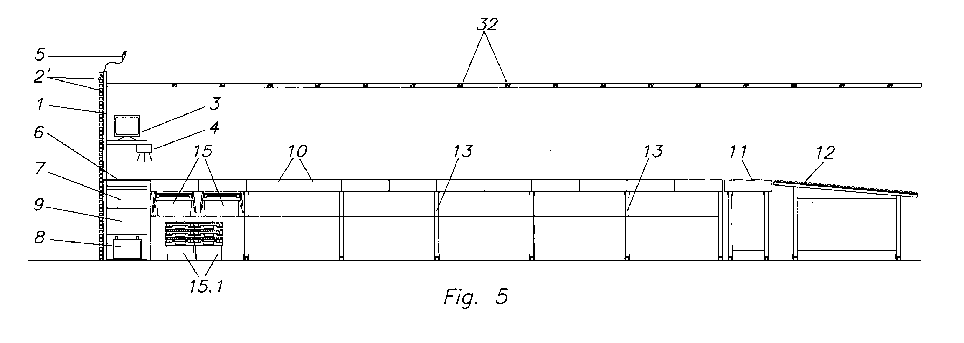

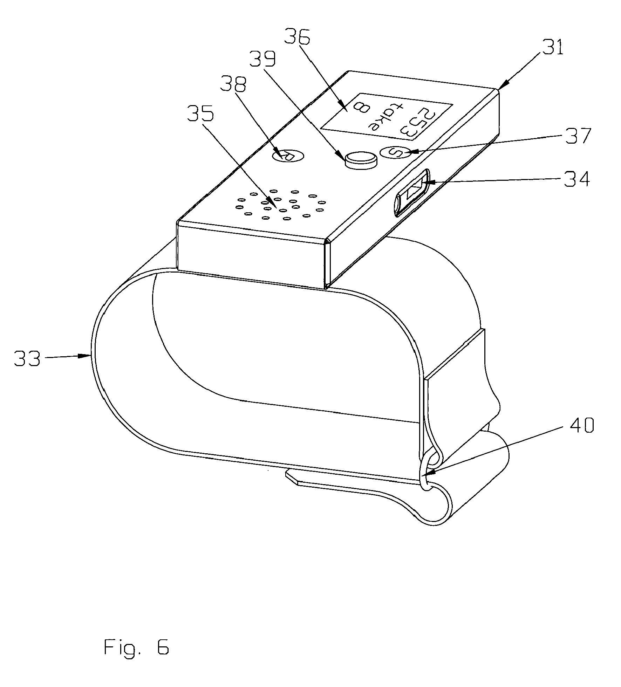

Bei der in Fig. 5 dargestellten Anlage sind ebenfalls mehrere Gegenstände an einem Mast **1** angebracht, nämlich eine Aufladestation 2' für bis zu zweiundvierzig RECO PILOT **31** (vgl. Fig. 6), ein Notebook **3,** und ein Scanner **4.** Der Mast 1 erhält eine Stromzufuhr mittels eines Netzkabels **5.** Im vorderen Teil der Anlage (in der Zeichnung links) ist eine Glasscheibe **6** vorgesehen, unter der sich die Steuerelektronik **7** befindet. Im unteren Bereich der sich an den Mast **1** anschließenden Anlage befindet sich eine Autobatterie **8,** mit der die Anlage angetrieben wird. Der Zwischenraum **9** zwischen der Steuerelektronik **7** und der Autobatterie **8** kann für die Lagerung von Ersatzteilen genutzt werden. Unmittelbar an die Glasscheibe **6** schließen sich mehrere Module **10** an. Danach folgen eine Waage **11** und eine Rollenbahn **12.** Die Module **10** ruhen auf sechs Stützen **13.** Die Remittenden werden von der Anlage in Boxen **15** sortiert. Die als Vorrat gehaltenen Boxen **15.1** können unterhalb der Module **10** gelagert werden. Oberhalb der durch die Module **10** gebildeten RECO-Bahn ist eine Display-Schiene **32** angeordnet.

Der in Fig. 6 dargestellte RECO PILOT **31** ist an einem Armband **33** befestigt, an dem ein in einem Gehäuse befindlicher Mikrorechner **34** angebracht ist. In dem Gehäuse befinden sich auch ein Lautsprecher **35,** ein beleuchtetes Farb-Display **36** sowie ein Start-Stopp-Knopf **37** und ein Reverse-Knopf **38.** Mit einem ferner noch an dem Gehäuse vorgesehenen Quitt-Knopf **39** bestätigt der Picker die Bearbeitung der aktuellen Bestellzeile. Das Armband **33** ist mit einem Bügel **40** versehen, der eine Anpassung des Armbandes **33** an den Umfang des Handgelenks des betreffenden Pickers ermöglicht.

## Patentansprüche

1. Anlage für die Durchführung von Maßnahmen im Zusammenhang mit dem Vertrieb von Presseerzeugnissen, so genannte Pressedistribution,
**dadurch gekennzeichnet,**
**dass** Vorrichtungen für die Kommissionierung und Vorrichtungen für die Remission von Presseerzeugnissen zusammengefasst sind, wobei mindestens eine der Vorrichtungen sowohl an der Kommissionierung als auch an der Remission beteiligt ist, so dass mit der so gebildeten Anlage sowohl eine fehlerfreie Kommissionierung als auch eine korrekte Remission durchgeführt werden können.

2. Anlage nach Anspruch 1, **dadurch gekennzeichnet,**
**dass** sie mehrere identische Module (10) mit jeweils zwei Motoren (16, 17) aufweist, die beide sowohl vorwärts als auch rückwärts laufen können, wobei der erste Motor als Antriebsmotor (16) dient und mit einem Bahnsensor (16.S) für den Antrieb versehen ist, während der zweite Motor als mit einem Bahnsensor (17.S) für die Schleuse versehener Schleusenmotor (17) ausgebildet ist,
**dass** der Antriebsmotor (16) schräg nach unten hängend angeordnet ist und auf der Antriebswelle (18) eines Getriebes (19) eine große Riemenscheibe (20) für einen Rundriemen (21) trägt, der eine Steckachse (22) auf der Ausgangsseite des betreffenden Moduls (10) antreibt,
**dass** auf der Steckachse (22) zwei Riemenscheiben (23, 24) montiert sind, die jeweils rechts und links des Moduls (10) je einen Rundriemen (25.A, 25.B) treiben, und zwar für den Längstransport der Stapel oder der Remissionsware, und dass der Schleusenmotor (17) horizontal eingebaut ist und auf der Antriebswelle (26) eine Gummiwalze (27) und ein Reibrad (28) trägt, das bei drehendem Motor (17) ein exzentrisch gelagertes weiteres Reibrad (29) antreibt.

3. Anlage nach Anspruch 1 oder 2, **dadurch gekennzeichnet, dass** zwölf Module (10) hintereinander auf einem Kabelkanal (30) aus Kunststoff aufgesteckt sind, der aus etwa 1 m langen Teilstücken zusammengesetzt ist, wobei der Kabelkanal (30) auf etwa sechs Pendelstützen (13) montiert ist.

4. Anlage nach einem der Ansprüche 1 bis 3, **dadurch gekennzeichnet, dass** sie für die Remission fünfundzwanzig automatische Schleusen (14) aufweist, die rechts und links auf einer durch die Module (10) gebildeten Bahn von 6 m Länge angeordnet sind.

5. Anlage nach einem Ansprüche 1 bis 4, **dadurch gekennzeichnet, dass** für den Antrieb der Anlage eine Autobatterie (8) vorgesehen ist.

6. Verfahren für die Durchführung von Maßnahmen mittels der Anlage nach einem der Ansprüche 1 bis 5, **dadurch gekennzeichnet, dass** anstelle der bisher üblichen rein sequentiellen Arbeitsweise bei der Kommissionierung der Presseerzeugnisse nunmehr die Kommissionierung durch parallele Aufteilung in viele gleichzeitige Arbeitsschritte durchgeführt wird, so dass jeder einzelne Picker für alle seine Tätigkeiten allein zuständig ist und sein Arbeitstempo nicht mehr von dem Arbeitstempo anderer Picker abhängig ist.

7. Verfahren nach einem der Ansprüche 1 bis 6, **dadurch gekennzeichnet, dass** jeder an der Anlage arbeitende Picker seine Anweisungen nicht nur akustisch, also per Sprache (pick by Voice), sondern gleichzeitig die betreffende Anweisung auch optisch erhält.

8. Verfahren nach Anspruch 7, **dadurch gekennzeichnet, dass** jeder Picker mit einem Gerät - intern als RECO PILOT bezeichnet - versehen ist, an dem neben einem Lautsprecher (35) ein mit einem Display (36) versehener Mikrorechner (34) angebracht ist, wobei in dem Mikrorechner (34) bis zu 20.000 Pick-Zeilen gespeichert sind.

9. Verfahren nach Anspruch 8, **dadurch gekennzeichnet, dass** das Display (36) als Farb-Display ausgebildet ist und dass mit jeder neuen Ansage (Anweisung) des RECO PILOT (31) die Farbe des Displays (36) wechselt, und zwar auf diejenige Farbe, mit der auch die Lagerortskennung markiert ist.

10. Anlage nach Anspruch 9, **dadurch gekennzeichnet, dass** der Mikrorechner (34) durch einen modifizierten handelsüblichen MP3/MP4-Player gebildet ist.
